# EUROPEAN PATENT APPLICATION

(11) **EP 2 136 547 A2**
(43) Date of publication of application: **23.12.2009**
(21) Application number: 09008098.7
(22) Date of filing: 19.06.2009
(51) Int. Cl.: H04N 3/15

(54) **CMOS solid state imaging device**

(30) Priority: 19.06.2008 JP 2008160369
(71) Applicant: Yamaha Corporation, Hamamatsu-shi, Shizuoka (JP)
(72) Inventor: Wakamori, Yasuo, Hamamatsu-shi Shizuoka (JP)
(74) Representative: HOFFMANN EITLE

(57) **Abstract**

Each pixel of a pixel matrix portion includes a photo diode, a floating diffusion, a transfer transistor for transferring a storage charge of the photo diode to the floating diffusion in response to a transfer pulse, a reset transistor for resetting the floating diffusion in response to a reset pulse, and a reading circuit for reading a voltage of the floating diffusion to a column signal line in response to a row selection pulse. A timing generator repeats a counting of subframes, and switches a frame consisting of the subframes in designated number. A vertical scanning circuit controls whether or not the reset pulse, the transfer pulse, and the row selection pulse should be fed to respective rows of the pixel matrix portion every subframe, and controls timings of the reset pulse and the transfer pulse in each subframe.

## Description

### BACKGROUND OF THE INVENTION

The present invention relates to a CMOS solid state imaging device in which a signal charge obtained by a photoelectric converting element is amplified in a plurality of pixels, which are aligned in a matrix fashion, and output as an electric signal from there respectively.

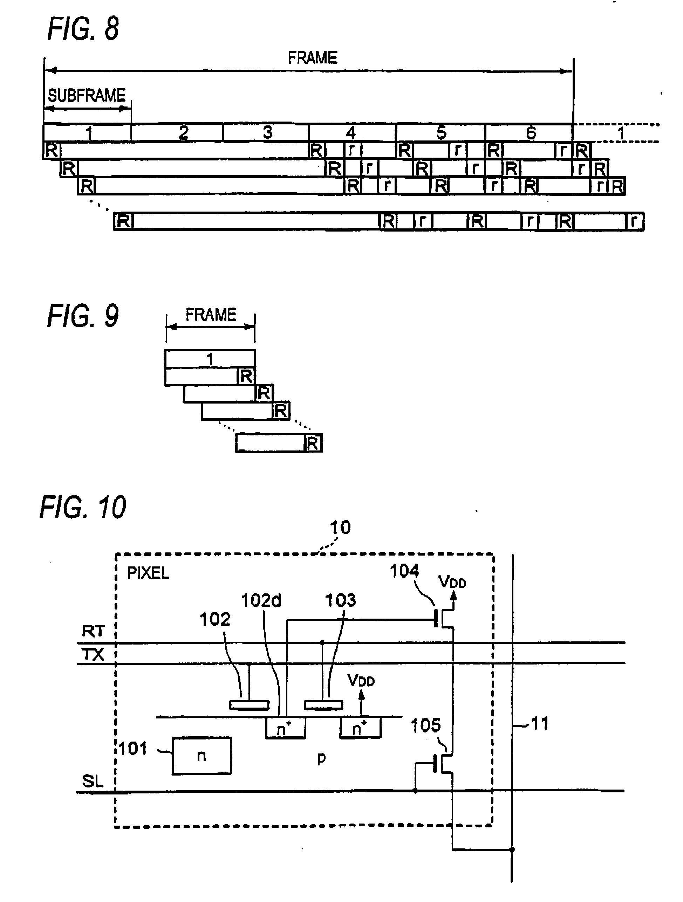

FIG.10 shows a configurative example of a common CMOS solid state imaging device. This CMOS solid state imaging device is constructed by aligning a plurality of pixels 10 in a matrix fashion. In FIG.10, only one pixel 10 is illustrated to prevent a complication of the drawings. As shown in FIG.10, one pixel 10 is constructed by a PD (Photo Diode) 101, and a transfer transistor 102, a reset transistor 103, an amplifier transistor 104, and a row selection transistor 105, which are formed of a MOS transistor respectively. These elements are formed on a p-type semiconductor substrate. In FIG.10, respective sectional structures of the PD (Photo Diode) 101, the transfer transistor 102, and the reset transistor 103 are illustrated, and the amplifier transistor 104 and the row selection transistor 105 are illustrated by using a circuit symbol respectively.

In FIG.10, the PD 101 is formed by embedding a low-concentration n-type impurity buried layer in a P-type semiconductor substrate, and is a photoelectric converting element that generates signal charges in response to a quantity of received light. A source of the transfer transistor 102 is connected to the PD 101, and a drain thereof constitutes an FD (Floating Diffusion) 102d. The transfer transistor 102 transfers the signal charges stored in the PD 101 to the FD 102d when a transfer pulse TX is applied to a gate. A source of the reset transistor 103 is connected to a power supply VDD, and a drain thereof constitutes the FD 102d. The reset transistor 103 resets the FD 102d to a potential of the power supply VDD when a reset pulse RT is applied to a gate. A drain of the amplifier transistor 104 is connected to the power supply VDD, and a gate thereof is connected to the FD 102d. The row selection transistor 105 is interposed between the amplifier transistor 104 and a column signal line 11, and a row selection pulse SL is applied to a gate. The amplifier transistor 104 and the row selection transistor 105 fulfill a role of a reading circuit that reads a voltage into the column signal line 11 in response to the charges stored in the FD 102d when the row selection pulse SL is applied. A plurality of pixels 10 each having the same configuration are connected to the column signal line 11, and a constant-current source acting as the load of the amplifier transistor 104 of each pixel 10 and a CDS (Correlated Double Sampling) circuit (their illustrations are omitted herein) are connected to the column signal line 11.

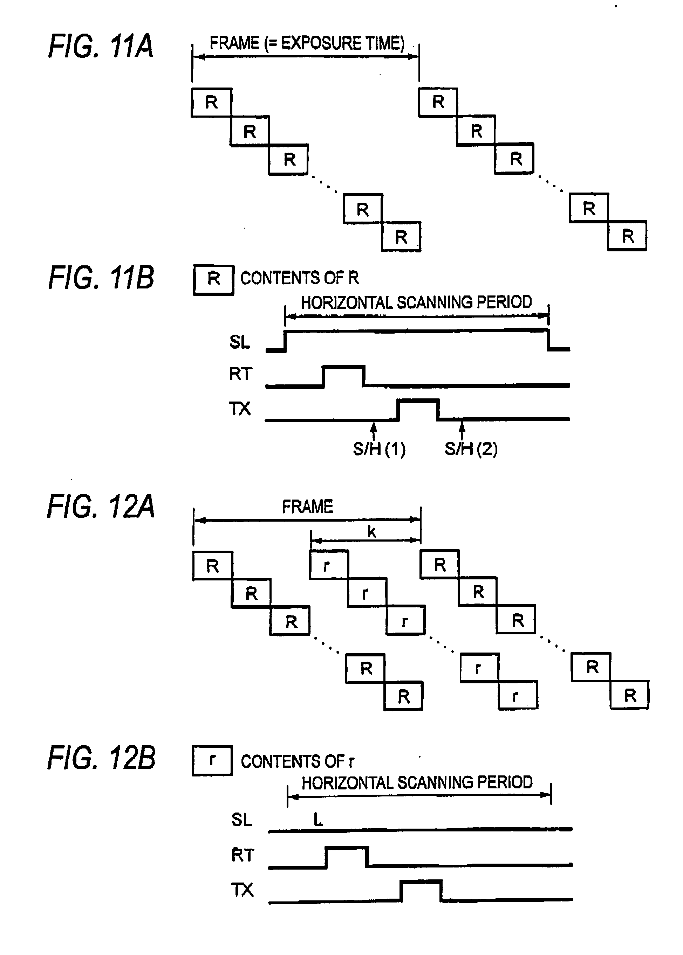

In the CMOS solid state imaging device, respective pixels constituting the matrix are driven sequentially, and pixel signals are read from respective pixels. In the most basic configuration, a frame (vertical scanning period) as an imaging period of one screen is divided into horizontal scanning periods in the same numbers as the number of rows of the pixel 10. Then, respective rows of the pixel 10 in each horizontal scanning period are driven sequentially, and thus pixel signals in respective rows are read sequentially. For convenience of explanation, a series of operations performed to obtain the pixel signals of one screen are called an imaging sequence. FIG.11A is a time chart showing an example of the imaging sequence in this case. FIG.11B is a waveform diagram showing the row selection pulse SL, the reset pulse RT, and the transfer pulse TX, which are generated to read the pixel signals on one row in one horizontal scanning period in the imaging sequence.

As shown in FIGS.11A and 11B, in the CMOS solid state imaging device, the pixels 10 of one row are chosen in each horizontal scanning period, and the row selection pulse SL is applied to the pixels 10 of the chosen row. The row selection transistor 105 is turned on in the pixels 10 of the row to which the row selection pulse SL is applied, the row selection transistor 105 connects the source of the column signal line 11 to the column signal line 11. The reset transistor 103 is turned on in the same pixel 10 when the reset pulse RT is applied, and the FD 102d is reset to a potential of the power supply VDD. The transfer transistor 102 is turned on in the same pixel when the transfer pulse TX is applied, and the signal charges stored in PD 101 are transferred to the FD 102d.

While such operation is executed, a voltage of the FD 102d is read out to the column signal line 11 via the amplifier transistor 104 and the row selection transistor 105. Each CDS circuit connected to each column signal line 11 samples the voltage that is read from the pixel 10 to the column signal line 11 at a point of time when the FD 102d is reset by the reset transistor 103 (S/H(1) in FIG.11B), and samples the voltage that is read from the pixel 10 to the column signal line 11 at a point of time when the signal charge is transferred by the transfer transistor 102 (S/H(2) in FIG.11B), whereby a difference between both voltages is output as a pixel signal.

The above operations are executed through all columns, and thus the pixel signals of one screen as the shooting result are obtained. Then, in the video shooting, such operation for obtaining the pixel signals of one screen is repeated every vertical scanning period.

In the imaging sequences shown in FIGS.11A and 11B, the signal charge is transferred from the PD 101 to the FD 102d in each pixel 10 every time when the transfer pulse TX is applied. The generation period of the transfer pulse TX per pixel corresponds to an exposure time. A quantity of signal charges transferred from the PD 101 to the FD 102d in response to the application of the transfer pulse TX reflects a quantity of received light of the PD 101 in a period required from a preceding application of the transfer pulse TX to a present application of the transfer pulse TX (i.e., exposure period). In the example in FIGS.11A and 11B, when attention is paid to one pixel 10, the transfer pulse TX is applied once per frame. Therefore, one frame gives the exposure time of the pixel 10.

Meanwhile, in order to pick up the image of high quality, a function of adjusting the exposure time to meet brightness of the subject as the shooting object and the background is needed. When the image is picked up in compliance with the shooting sequence shown in FIGS.11A and 11B, the exposure time can be changed by changing a length of one frame. However, this approach cannot be employed in the CMOS solid state imaging device in which a frame rate is fixed. Therefore, in order to make adjustment of the exposure time, another imaging sequence is needed.

As the technology to implement exposure time other than the exposure time corresponding to one frame while fixing a time length of the frame, there is the electronic shutter. As the electronic shutter, there are various types. For example, as the well known electronic shutter, such a shutter is provided that, prior to the reset pulse RT and the transfer pulse TX that are applied onto the pixel 10 on each row to read the pixel signals, the reset pulse RT and the transfer pulse TX are fed at a timing that is earlier by the exposure time, to erase the storage charges in the PDs 101 in the pixels 10 on that row. FIGS.12A and 12B showing another example of the imaging sequence to implement a function as the electronic shutter of this type. In this example, when the pixels signals are read by applying the row selection pulse SL, the reset pulse RT, and the transfer pulse TX to the pixels 10 on one row in each horizontal scanning period, the reset pulse RT and the transfer pulse TX are fed to the pixels 10 on the same row in the horizontal scanning period that is earlier than this horizontal scanning period by k (k is an integer) horizontal scanning periods, to erase the storage charges in the PDs 101 in the pixels 10. According to this example, the exposure time can be adjusted in integral multiple segments of the horizontal scanning period.

In order to set the exposure time to a time length shorter than one horizontal scanning period, the position where these pulses are generated should be adjusted within one horizontal scanning period when the reset pulse RT and the transfer pulse TX are applied to erase the storage charges in the PD 101.
Here, the technology relating to the electronic shutter described above is disclosed in JP-A-2001-111900, JP-A-2002-232788, for example.

The CMOS solid state imaging device described above gets image data of one screen by one exposing operation. However, out of the CMOS solid state imaging devices, there are some devices that produce the image data with a wide dynamic range by performing the exposure in plural times while changing an exposure time, and then synthesizing respective pixel signals obtained by these exposures. In the CMOS solid state imaging devices of this type, the image is picked up in the imaging sequence that is different from that used to get the image data of one screen by one exposing operation.

As described above, the adequate imaging sequence varies depending upon the application of the CMOS solid state imaging device. Therefore, in order to implement the CMOS solid state imaging device that can be used in wide applications, the control circuit that can run all thinkable imaging sequences must be provided. However, such a problem existed that, when there are many varieties of thinkable imaging sequences, the control circuit that runs these imaging sequences becomes complicated.

### SUMMARY OF THE INVENTION

The present invention has been made in view of the circumstances explained above, and it is an object of the present invention to provide a CMOS solid state imaging device capable of shooting an image in a wide variety of imaging sequences with a simple configuration.

The present invention provides a CMOS solid state imaging device, comprising:
a pixel matrix portion constructed by aligning a plurality of pixels in a matrix fashion, each of the pixels including a photoelectric converting element that generates charges in response to a quantity of received light, a charge storage portion, a transfer transistor that transfers the charges stored in the photoelectric converting element to the charge storage portion when a transfer pulse is applied, a reset transistor that resets an electric potential of the charge storage portion when a reset pulse is applied, and a reading circuit that reads out a voltage of the charge storage portion to a column signal line provided every pixel column when a row selection pulse is applied;
a register which stores frame constituent information of a frame composed of at least one subframe having a predetermined time length; and
a drive controller that repeats counting the subframe, performs switching of the frame, determines whether or not the reset pulse, the transfer pulse and the row selection pulse are to be fed to the pixels of each row in the pixel matrix portion according to the frame constituent information every subframe, and controls timing of the reset pulse and the transfer pulse to be fed to the pixels according to the frame constituent information.

According to the present invention, one frame is constructed by one or plural subframes, it is determined whether or not the reset pulse, the transfer pulse, and the row selection pulse are fed to pixels of each row in the pixel matrix portion according to frame constituent information every subframe respectively, and timings of the reset pulse and the transfer pulse that are fed to the pixels of each row of the pixel matrix portion in each subframe are controlled. Therefore, a wide variety of imaging sequences can be carried out with a simple configuration.

### BRIEF DESCRIPTION OF THE DRAWINGS

FIG.1 is a block diagram showing a configuration of a CMOS solid state imaging device as an embodiment of the present invention.
FIG.2 is a block diagram showing a configuration of a timing generator 50 and a vertical scanning circuit 60 in the embodiment.
FIGs.3A to 3C are views showing a relationship between a frame, a subframe, a horizontal scanning period, and a counting clock in the embodiment.
FIG.4 is a view showing an example of an imaging sequence executed in the embodiment.
FIG.5 is a view showing another example of an imaging sequence executed in the embodiment.
FIG.6 is a view showing still another example of an imaging sequence executed in the embodiment.
FIG.7 is a view showing yet another example of an imaging sequence executed in the embodiment.
FIG.8 is a view showing still a further example of an imaging sequence executed in the embodiment.
FIG.9 is a view showing yet a further example of an imaging sequence executed in the embodiment.
FIG.10 is a view showing a configuration of a pixel of a common CMOS solid state imaging device.
FIGs.11A and 11B are views showing an example of an imaging sequence of the CMOS solid state imaging device.
FIGs.12A and 12B are views showing another example of an imaging sequence of the CMOS solid state imaging device.

### DETAILED DESCRIPTION OF PREFERRED EMBODIMENTS

An embodiment of the present invention will be explained with reference to the drawings hereinafter.

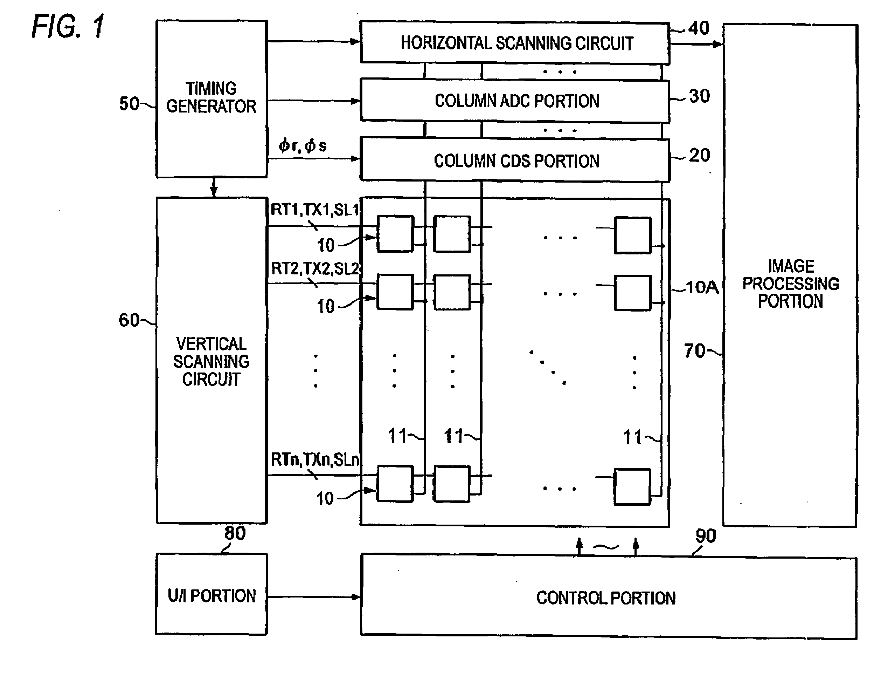

FIG.1 is a block diagram showing a configuration of a CMOS solid state imaging device as an embodiment of the present invention. In FIG.1, a pixel matrix portion 10A is constructed by aligning the pixels 10 shown in foregoing FIG.10 in a matrix fashion. A column CDS portion 20 is an assembly of CDS circuits provided every column of the pixels 10 in the pixel matrix portion 10A. Each CDS circuit samples twice a voltage that is read out to each column signal line 11 of the pixel matrix portion 10A (see S/H (1) and S/H (2) in FIG.11B) under control of a timing generator 50, and outputs an analog pixel signal respectively. A column ADC portion 30 is an assembly of ADCs (Analog to Digital Converters) provided every column of the pixels 10 in the pixel matrix portion 10A. Each ADC converts the analog pixel signal being output from each CDS circuit into a digital pixel signal under control of the timing generator 50. A horizontal scanning circuit 40 is a shift register that has the same number of stages as the number of columns of the pixel matrix portion 10A. This horizontal scanning circuit 40 repeats the operation that captures digital pixel signals of one row being output from the column ADC portion 30 every horizontal scanning period, and serial-transfers this signal to an image processing portion 70 under control of the timing generator 50.

A vertical scanning circuit 60 is a circuit that generates a row selection pulse SLi, a reset pulse RTi, and a transfer pulse TXi for each row I of the pixel matrix portion 10A under control of the timing generator 50 (where i is the row number of the row of the pixels in the pixel matrix portion 10A). The timing generator 50 is a circuit that generates signals for timing control of respective portions such as the vertical scanning circuit 60, the column CDS portion 20, the column ADC portion 30, the horizontal scanning circuit 40, etc. of the CMOS solid state imaging device. In the present embodiment, the timing generator 50 and the vertical scanning circuit 60 fulfill a role of a drive controller that repeats the counting of subframes having a predetermined time length, performs the switching of the frame consisting of designated number of subframes, decides whether or not the reset pulse RTi, the transfer pulse TXi, and the row selection pulse SLi are fed to the pixels of each row of the pixel matrix portion 10A respectively, every subframe constituting the frame, and controls timings of the reset pulse RTi and the transfer pulse TXi that are fed to the pixels 10 on each row of the pixel matrix portion 10A in each subframe. In this case, the concrete configuration will be described later.

The image processing portion 70 is a unit that processes the digital pixel signal fed via the horizontal scanning circuit 40, and synthesizes image data of one screen every frame. The image data synthesized by the image processing portion 70 is displayed on a monitor (not shown) or recorded on a recording medium such as HD (hard disc)(not shown), or the like. In the present embodiment, in some case the exposure is performed in plural times under different exposure conditions in one frame and then the digital pixel signal picked up in respective exposure conditions are fed to the image processing portion 70 via the horizontal scanning circuit 40. In this case, the image processing portion 70 performs the process of synthesizing the digital pixel signals being picked up in different exposure conditions and outputting the image data with a wide dynamic range.

A U/I (User Interface) portion 80 is constructed by a display device such as a liquid crystal display panel and various operating pieces such as push buttons, and the like. The U/I portion 80 fulfills a role of displaying various guide information about operations of the CMOS solid state imaging device and acquiring various information about the shooting conditions, etc. from a user via the operating pieces. A control portion 90 controls respective portions of the CMOS solid state imaging device in compliance with the instruction acquired from the user via the U/I portion 80.

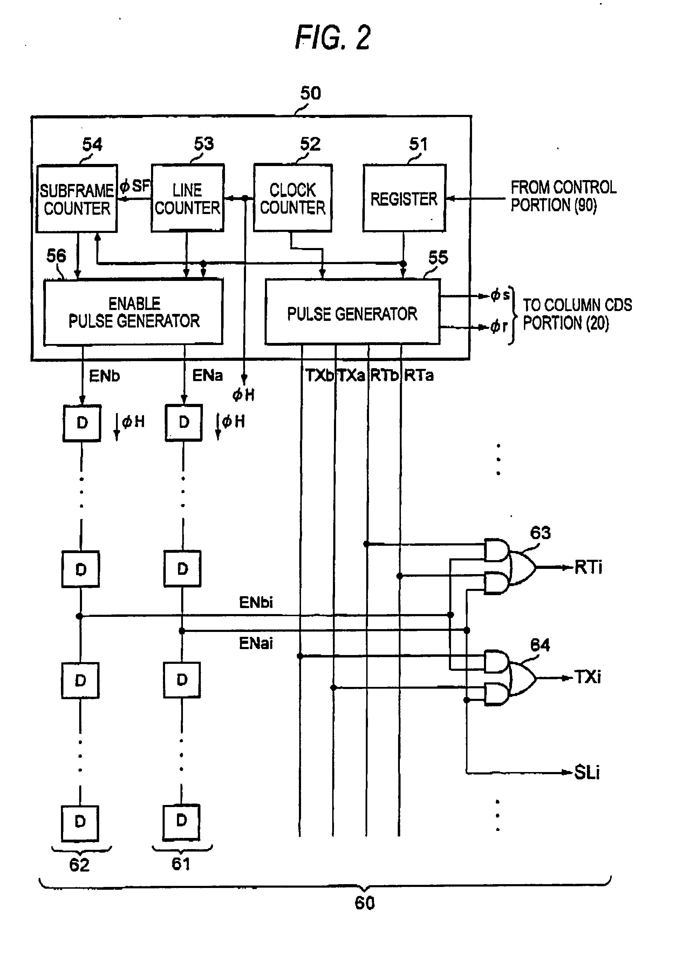

FIG.2 is a block diagram showing a concrete configuration of the timing generator 50 and the vertical scanning circuit 60. As shown in FIG.2, the timing generator 50 includes a register 51, a clock counter 52, a line counter 53, a subframe counter 54, a pulse generator 55, and an enable pulse generator 56.

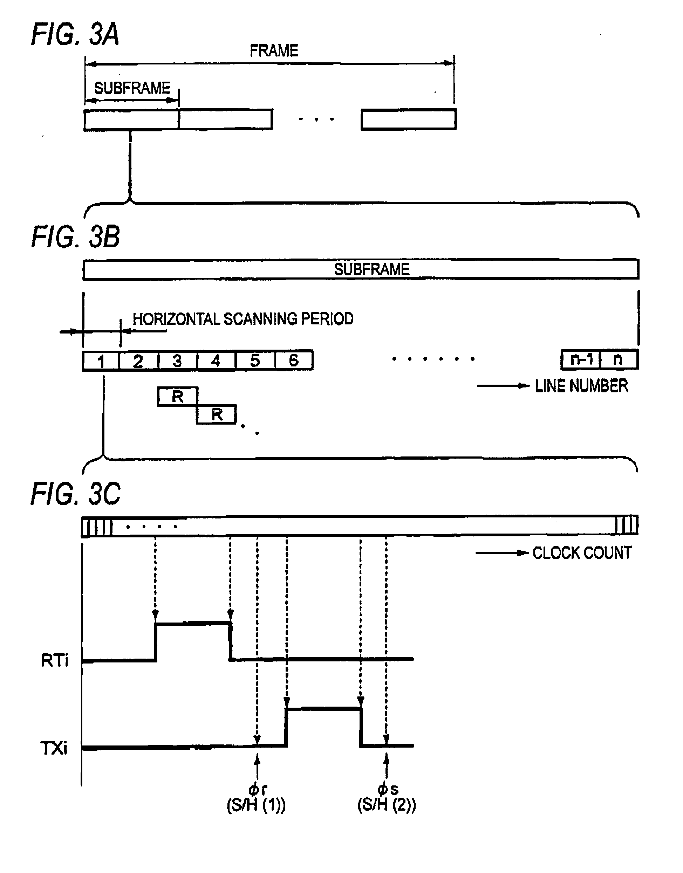

The register 51 stores frame constituent information given from the control portion 90. In the present embodiment, the image data of one screen is produced as the shot result every one frame. In the present embodiment, one frame can be constructed by one subframe or by connecting a plurality of subframes, as shown in FIG.3A. It may be set freely how many subframes should be connected to constitute the frame. The frame constituent information contains the information indicating the number of subframes constituting the frame.

As shown in FIG.3B, one subframe is partitioned into the horizontal scanning periods that are equal in number to the number n of rows of the pixel matrix portion 10A. Each horizontal scanning period constituting the subframe is specified by the line numbers of 1 to n. Each horizontal scanning period has a time length in which the analog pixel signals of one row are read from the pixel matrix portion 10A, then are digitized, and are serial-transferred to the image processing portion 70. Therefore, in one subframe, the pixel signals can be read from all pixels of the pixel matrix portion 10A and serial-transferred to the image processing portion 70. In the present embodiment, in each subframe, the pixel signal can be read and the storage charge in the PD 101 of the pixel 10 can be erased, or nothing may be done. The frame constituent information contains the information indicating what process should be applied to the pixel matrix portion 10A in each subframe. In the present embodiment, when the operation of reading the pixel signal or the operation of erasing the storage charge in the PD 101 is intended in some subframe, it can be chosen at what horizontal scanning period such operation should be started in the subframe. In the example shown in FIG.3B, the reading of the pixel signal is started in the horizontal scanning period whose line number is "3". The frame constituent information contains the information indicating the line number of the horizontal scanning period at which the operation of reading the pixel signal or the operation of erasing the storage charge in the PD 101 should be started.

As shown in FIG.3C, in the present embodiment, one horizontal scanning period is measured by counting the clock at a predetermined frequency. The clock counter 52 in FIG.2 counts the clock. A count value of the clock counter 52 is utilized as information indicating a relative time in the horizontal scanning period. The frame constituent information contains the information indicating respective times at which various timing information such as timings of leading edges and trailing edges of the reset pulse RTi and the transfer pulse TXi, timings at which sampling pulses φr, φs fed to the column CDS portion 20 are generated, and the like are generated and which are represented in terms of the count value of the clock counter 52.

In FIG.2, the clock counter 52 outputs a line clock φH every time when the count of the clock in one horizontal scanning period is ended. The line counter 53 counts this line clock φH. In the case that the number of rows of the pixel matrix portion 10A is n, the line counter 53 outputs a subframe clock φSF every time when the n line clocks φH are counted, and initializes the count value. Therefore, a count value of the clock counter 52 always indicates the line number in the present horizontal scanning period. The subframe counter 54 repeats the operation of counting the subframe clock φSF and then initializing the count value every time when the subframe clocks φSF whose number corresponds to the number of subframes indicated by the frame constituent information are counted. A count value of the subframe counter 54 indicates the number of the present subframe.

The pulse generator 55 generates two types of reset pulses RTa, RTb and two types of transfer pulses TXa, TXb. Here, the reset pulse RTa and the transfer pulse TXa are utilized to read the pixel signal, and the reset pulse RTb and the transfer pulse TXb are utilized in the operation as the electronic shutter, i.e., to erase the storage charge of the PD 101 of the pixel 10. Edge timings of respective pulses are designated by the frame constituent information, as described above.

In addition to the reset pulse and the transfer pulse, the pulse generator 55 generates sampling pulses φr, φs for causing the column CDS portion 20 to execute the correlated double sampling at the timing indicated by the frame constituent information, a sampling pulse for causing the column ADC portion 30 to execute the A/D conversion subsequently to the correlated double sampling, and a shift clock for causing the horizontal scanning circuit 40 to execute the serial transmission subsequently.

The enable pulse generator 56 generates two types of enable pulses ENa, ENb both having a pulse width that is equivalent to one horizontal scanning period. The enable pulse ENa is a pulse to command a start of the reading of the pixel signal, and the enable pulse ENb is a pulse to command a start of the erasure of the storage charge of the PD 101 of the pixel 10. When the frame constituent information indicates such an effect that the pixel signal should be read in the horizontal scanning period having a certain line number of a certain subframe, the enable pulse generator 56 outputs the enable pulse ENa in the preceding horizontal scanning period to the indicated horizontal scanning period. When the frame constituent information indicates such an effect that the storage charge of the PD 101 of the pixel 10 should be erased in the horizontal scanning period having a certain line number of a certain subframe, the enable pulse generator 56 outputs the enable pulse ENb in the preceding horizontal scanning period to the indicated horizontal scanning period.

The vertical scanning circuit 60 has shift registers 61, 62 having stages that are equal in number to the number n of rows of the pixel matrix portion 10A respectively, and AND-OR gates 63, 64 provided every row of the pixel matrix portion 10A. The line clock φH output from the clock counter 52 of the timing generator 50 is fed to the clock terminals of respective flip-flops constituting respective stages of the registers 61, 62. The enable pulse ENa output from the enable pulse generator 56 is fed to the data input terminal in the first stage of the shift register 61, and the enable pulse ENb output from the enable pulse generator 56 is fed to the data input terminal in the first stage of the shift register 62. The shift register 61 shifts the enable pulse ENa sequentially to the later stage in response to the line clock φH, and the shift register 62 shifts the enable pulse ENb sequentially to the later stage in response to the line clock φH.

Each stage i of the shift register 61 feeds the enable pulse ENa coming from the preceding stage to the AND-OR gates 63, 64, which correspond to the i-th row of the pixel matrix portion 10A, as the enable pulse ENai. This enable pulse ENai is fed to the AND-OR gates 63, 64, and also is fed to respective pixels on the i-th row of the pixel matrix portion 10A as the row selection pulse SLi. Each stage i of the shift register 62 feeds the enable pulse ENb coming from the preceding stage to the AND-OR gates 63, 64, which correspond to the i-th row of the pixel matrix portion 10A, as the enable pulse ENbi.

The AND-OR gate 63 corresponding to the i-th row of the pixel matrix portion 10A calculates a logical product between the enable pulse ENai and the reset pulse RTa and a logical product between the enable pulse ENbi and the reset pulse RTb, and outputs a logical sum of both logical products as the reset pulse RTi. The AND-OR gate 64 corresponding to the i-th row of the pixel matrix portion 10A calculates a logical product between the enable pulse ENai and the transfer pulse TXa and a logical product between the enable pulse ENbi and the transfer pulse TXb, and outputs a logical sum of both logical products as the transfer pulse TXi.

While the enable pulse ENai is produced, the AND-OR gate 63 corresponding to the i-th row of the pixel matrix portion 10A chooses the reset pulse RTa output from the pulse generator 55, and the AND-OR gate 64 chooses the transfer pulse TXa. Then, the reset pulse RTa and the transfer pulse TXa are fed to the pixels 10 on the i-th row of the pixel matrix portion 10A as the reset pulse RTi and the transfer pulse TXi respectively. The enable pulse ENai is fed to the pixels 10 on the i-th row of the pixel matrix portion 10A as the row selection pulse SLi. Therefore, a voltage of the FD 102d is read out to the column signal line 11 in respective pixels 10 on the i-th row of the pixel matrix portion 10A, and thus the reading of the pixel signals is performed.

In contrast, while the enable pulse ENbi is produced, the AND-OR gate 63 corresponding to the i-th row of the pixel matrix portion 10A chooses the reset pulse RTb output from the pulse generator 55, and the AND-OR gate 64 chooses the transfer pulse TXb. Then, the reset pulse RTb and the transfer pulse TXb are fed to the pixels 10 on the i-th row of the pixel matrix portion 10A as the reset pulse RTi and the transfer pulse TXi respectively. In this case, the row selection pulse SLi is not fed to the pixels 10 on the i-th row of the pixel matrix portion 10A. Therefore, the erasure of the storage charge of the PD 101 is performed in the pixels 10 on the i-th row of the pixel matrix portion 10A.

In FIG.1, the control portion 90 writes the adequate frame constituent information in the register 51 according to the shooting conditions that the user desires, and thus causes the timing generator 50, the vertical scanning circuit 60, the column CDS portion 20, the column ADC portion 30, and the horizontal scanning circuit 40 to execute the operation in response to the shooting conditions. The control portion 90 causes the image processing portion 70 to process the digital pixel signals acquired via the horizontal scanning circuit 40 according to the shooting conditions that the user desires. Preferably, the control portion 90 stores the frame constituent information and image processing programs executed by the image processing portion 70, to correlate with various shooting conditions. The control portion 90 causes the U/I portion 80 to provide the GUI, which is used to instruct the desired shooting conditions, to the user, and provides the frame constituent information and the image processing program corresponding to the shooting conditions that the user desires to the timing generator 50 and the image processing portion 70 respectively.
With the above, details of the configuration of the CMOS solid state imaging device according to the present embodiment are explained.

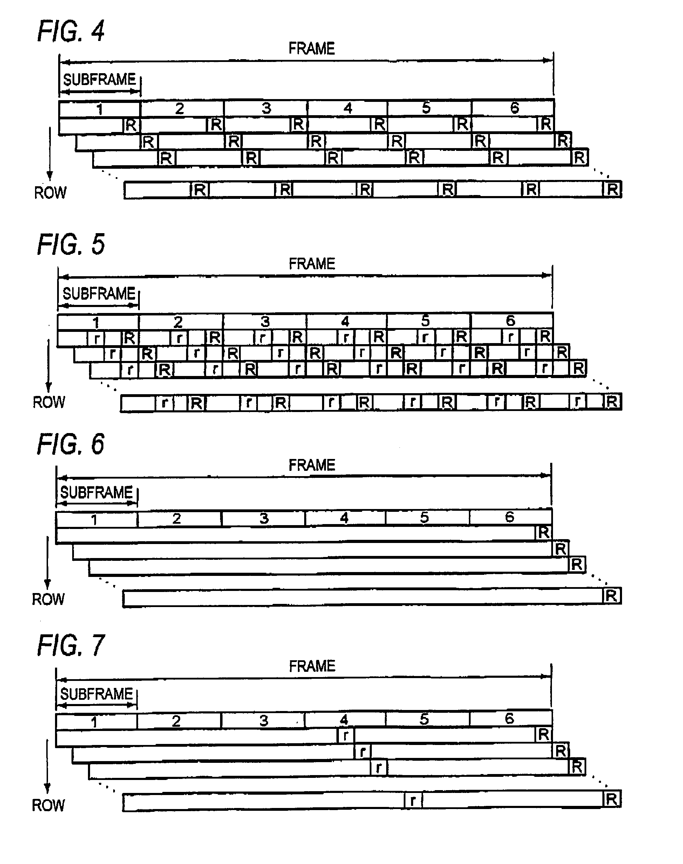

FIG.4 to FIG.9 show an example of the imaging sequence executed in the CMOS solid state imaging device according to the embodiment respectively. In an example shown in FIG.4, six subframes constitute one frame. In each subframe, the pixel signals are read from the pixel matrix portion 10A in the last horizontal scanning period. In this example, the pixel signals are read every subframe when attention is paid to each pixel 10, and thus one subframe gives the exposure time.

In an example shown in FIG.5, like FIG.4, six subframes constitute one frame, and the pixel signals are read from the pixel matrix portion 10A in the last horizontal scanning period in each subframe. However, in this example, the storage charge of the PD 101 of the pixel 10 is erased at the horizontal scanning period that is positioned around a center of each subframe. Therefore, in this example, a time from the horizontal scanning period in which the storage charge is erased to the subsequent horizontal scanning period in which the pixel signals are read gives the exposure time.

In an example shown in FIG.6, six subframes constitute one frame, and the pixel signals are read from the pixel matrix portion 10A only in the last horizontal scanning period in the last subframe. Therefore, in this example, one frame=six subframes gives the exposure time.

In an example shown in FIG.7, six subframes constitute one frame. The pixel signals are read from the pixel matrix portion 10A in the last horizontal scanning period in the last subframe out of six subframes. The storage charge of the PD 101 of the pixel 10 is erased at the horizontal scanning period that is positioned around a center of the 4-th subframe out of six subframes. Therefore, in this example, about 2.5 subframes gives the exposure time.

In an example shown in FIG.8, six subframes constitute one frame, and the exposure is executed three times in one frame. First, the pixel signals are read in the first horizontal scanning period of the first subframe, and the pixel signals are read in the first horizontal scanning period of the fourth subframe. The interval between the readings of the pixel signals executed two times corresponds to the first exposure, and three subframes gives the exposure time. Then, the storage charge of the PD 101 is erased in the horizontal scanning period around a center of the fourth subframe, and the pixel signals are read in the first horizontal scanning period of the fifth subframe. The interval from the erasure of the storage charge to the reading of the pixel signals corresponds to the second exposure, and about half subframe gives the exposure time. Then, the storage charge of the PD 101 is erased in the horizontal scanning period after the center of the fifth subframe, and the pixel signals are read in the first horizontal scanning period of the sixth subframe. The interval from the erasure of the storage charge to the reading of the pixel signals corresponds to the third exposure, and the exposure time of the third exposure is shorter than the second exposure time. Then, the storage charge of the PD 101 is erased in the last horizontal scanning period of the sixth subframe, and the pixel signals are read in the first horizontal scanning period of the first subframe of the next frame. The interval from the erasure of the storage charge to the reading of the pixel signals corresponds to the fourth exposure. This fourth exposure is shortest out of the first to fourth exposure times.

In an example shown in FIG.9, one subframe constitutes one frame, and the image shooting is performed at a maximum frame rate. In this example, the pixel signals are read once in one subframe (one frame), and one subframe gives the exposure time.

In order to make the image shooting in compliance with respective imaging sequences described above, the frame constituent information concerning the number of subframes per frame in the desired imaging sequence, information indicating whether or not the pixel signals should be read in each subframe, information indicating whether or not the storage charge of the PD 101 should be erased in each subframe, the line number of the concerned horizontal scanning period when the pixel signals should be read in each subframe, the line number of the concerned horizontal scanning period when the storage charge should be erased in each subframe, etc. may be written into the register 51 of the timing generator 50, and the image processing program corresponding to the desired imaging sequence may be loaded on the image processing portion 70. With the above, examples of several imaging sequences are shown, but these are mere examples. In the present embodiment, when the adequate frame constituent information are prepared, the erasure of the storage charge and the reading of the pixel signals can be executed at any timings and also the exposure can be executed in any number of times. In this manner, according to the present embodiment, a wide variety of imaging sequences can be carried out with a simple configuration.

As above, the embodiment of the present invention is explained, but other embodiments of the present invention may be considered. For example, other embodiments will be given as follows.

(̅1) In the above embodiment, the frame constituent information corresponding to the imaging conditions indicated by the user are stored in the timing generator 50, and the imaging sequence is executed in compliance with the frame constituent information. In this case, the frame constituent information are not fixed during the image shooting, but the control portion 90 may evaluate the image data obtained from the image processing portion 70 and then the frame constituent information and the image processing program may be switched dynamically during the image shooting to improve a quality of the image.

(2) In the above embodiment, the timings at which the enable pulses ENa, ENb are generated are controlled by the segment of one horizontal scanning period. In this case, the enable pulse generator 56 may be constructed to generate the enable pulses ENa, ENb at the timings fixed in each subframe.

(3) In the above embodiment, the pulse generator 55 may be constructed to control the timings, at which the reset pulses RTa, RTb are generated, and the timings, at which the transfer pulses TXa, TXb are generated, in respective horizontal scanning periods. In this case, the pulse generator 55 may be constructed to control a part of pulses, e.g., only the timings at which the reset pulse RTb and the transfer pulse TXb are generated.

(4) In the above embodiment, one subframe is partitioned into the horizontal scanning periods that are equal in number to the number of rows of the pixel matrix portion 10A. In this case, one subframe may be partitioned into the horizontal scanning periods that are larger in number than the number of rows of the pixel matrix portion 10A.

## Claims

1. A CMOS solid state imaging device, comprising:
a pixel matrix portion constructed by aligning a plurality of pixels in a matrix fashion, each of the pixels including a photoelectric converting element that generates charges in response to a quantity of received light, a charge storage portion, a transfer transistor that transfers the charges stored in the photoelectric converting element to the charge storage portion when a transfer pulse is applied, a reset transistor that resets an electric potential of the charge storage portion when a reset pulse is applied, and a reading circuit that reads out a voltage of the charge storage portion to a column signal line provided every pixel column when a row selection pulse is applied;
a register which stores frame constituent information of a frame composed of at least one subframe having a predetermined time length; and
a drive controller that repeats counting the subframe, performs switching of the frame, determines whether or not the reset pulse, the transfer pulse and the row selection pulse are to be fed to the pixels of each row in the pixel matrix portion according to the frame constituent information every subframe, and controls timing of the reset pulse and the transfer pulse to be fed to the pixels according to the frame constituent information.

2. The CMOS solid state imaging device according to claim 1, wherein the drive controller includes:
an enable pulse generator that generates a first enable pulse for reading out pixel signal indicating a quantity of received light of the photoelectric converting element from the respective pixels of the pixel matrix portion in the subframe indicated by the frame constituent information, and generates a second enable pulse for erasing the storage charge of the photoelectric converting element in the subframe indicated by the frame constituent information;
a pulse generator that generates first and second reset pulses and first and second transfer pulses; and
a vertical scanning circuit that applies the row selection pulse, the first reset pulse and the first transfer pulse to the pixels of each row in the pixel matrix portion in response to the first enable pulse, and applies the second reset pulse and the second transfer pulse to the pixels of each row in the pixel matrix portion in response to the second enable pulse.

3. The CMOS solid state imaging device according to claim 2, wherein
the subframe is partitioned into a plurality of horizontal scanning periods, and
the enable pulse generator generates the first enable pulse and the second enable pulse in the horizontal scanning period, indicated by the frame constituent information, of the subframe indicated by the frame constituent information.

4. The CMOS solid state imaging device according to claim 3, wherein the pulse generator generates the first and second reset pulses and the first and second transfer pulses at timings, indicated by the frame constituent information, in the horizontal scanning periods respectively.

5. The CMOS solid state imaging device according to claim 1, wherein
the subframe is partitioned into a plurality of horizontal scanning periods, each of which has a time length in which pixel signals of one row are read from the pixel matrix portion, so that in one subframe, pixel signals are read from all pixels of the pixel matrix portion.
